**Europäisches Patentamt**

**European Patent Office**

**Office européen des brevets**

(19)

(11) Veröffentlichungsnummer : **0 065 031**
**B1**

(12) **EUROPÄISCHE PATENTSCHRIFT**

(45) Veröffentlichungstag der Patentschrift :
19.12.84

(51) Int. Cl.³ : **B 21 K 27/06**, B 23 D 33/08

(21) Anmeldenummer : 81104190.4

(22) Anmeldetag : 20.05.81

(54) Vorrichtung zum Abscheren von Abschnitten von Draht oder Stangen.

(43) Veröffentlichungstag der Anmeldung :
24.11.82 Patentblatt 82/47

(45) Bekanntmachung des Hinweises auf die Patenterteilung : 19.12.84 Patentblatt 84/51

(84) Benannte Vertragsstaaten :
AT BE CH FR GB IT LI NL

(56) Entgegenhaltungen :
CH-A- 599 838
DE-B- 2 211 261
DE-C- 591 181
DE-C- 834 563
FR-A- 2 374 980
US-A- 2 254 316
US-A- 3 972 211

(73) Patentinhaber : **L. SCHULER GmbH**
**Bahnhofstrasse 41 - 67 Postfach 1222**
**D-7320 Göppingen (DE)**

(72) Erfinder : **Mielke, Willi**
**Zum Grind 69**
**D-4100 Duisburg 25 (DE)**

## Beschreibung

Die Erfindung bezieht sich auf eine Vorrichtung zum Abscheren von Abschnitten von Draht oder Stangen, insbesondere in Umformpressen, mit einem von einem geradlinig hin- und hergehenden Messerschlitten getragenen Schermesser und einem diesem zugeordneten, an dem Messerschlitten angelenkten Gegenhalter in der Form eines Gegenhalterhebels zum Einspannen des Abschnittes bei dem Schervorgang sowie einem Gegenmesser, wobei der Gegenhalterhebel an dem Messerschlitten über ein Kniehebelsystem und in Halterichtung federnd vorgespannt ist und ein Hebelsystem zum mechanischen Steuern der Bewegung des Gegenhalterhebels vorgesehen ist.

Bei einer bekannten Vorrichtung dieser Art (CH-A-599 838) ist die federnde Vorspannung des Gegenhalterhebels gegen den Messerschlitten über das Kniehebelsystem durch elastische Zwischenglieder verwirklicht, die über weitere Zwischenglieder an einer Verlängerung des von dem Gegenhalterhebel abgewandten Hebels des Kniehebelsystems angreifen. Das zum Steuern der Bewegung des Gegenhalterhebels vorgesehene Hebelsystem wirkt hierbei über die elastischen Zwischenglieder. Dies hat den Nachteil, daß die Bewegungen des Hebelsystems nur mit der den elastischen Zwischengliedern eigenen Elastizität ungenau in Bewegungen des Kniehebelsystems und damit des Gegenhalterhebels umgesetzt werden können.

Demgegenüber ist es Aufgabe der Erfindung, die für die Vorspannung des Gegenhalterhebels erforderliche Elastizität derart in dem aus Hebelsystem und Kniehebelsystem bestehenden Bewegungsmechanismus für den Gegenhalterhebel anzuordnen, daß das Steuern der Bewegung des Gegenhalterhebels nicht über eine elastisches Zwischenglied und demgemäß genau erfolgen kann.

Bei einer Vorrichtung der eingangs genannten Art wird diese Aufgabe dadurch gelöst, daß das Kniehebelsystem aus einer Feder und einer an dieser in einem stumpfen Winkel und an dem Gegenhalterhebel angelenkten Koppelstange besteht, wobei der Winkel zwischen Feder und Koppelstange über eine Steuereinrichtung veränderbar ist, die eine mit dem Anlenkpunkt von Feder und Koppelstange verbundene Steuerstange aufweist.

Mit dieser Lösung liegt die Feder, die die für das Vorspannen erforderliche Elastizität darstellt, zwar in dem Kniehebelsystem, jedoch außerhalb des Bewegungsmechanismus, der die Bewegung des Gegenhalterhebels unmittelbar steuert, der aber gleichwohl auch das Kniehebelsystem betätigt.

Zweckmäßigerweise liegt der Winkel zwischen Feder und Koppelstange in einem Bereich von 120° bis 170°.

Um die Vorrichtung verschiedenen Materialstärken der abzuscherenden Abschnitte anpassen zu können, soll die Länge der Koppelstange einstellbar sein.

Die Steuereinrichtung kann einen hin- und herschwenkbaren Steuerhebel aufweisen, der mit der Steuerstange verbunden ist.

Von besonderem Vorteil ist es, wenn die Steuerstange derart angeordnet ist, daß sie bei Rückwärtsbewegung des Messerschlittens eine Stellung erreicht oder durchläuft, in der die Steuerstange in der Verlängerung der Winkelhalbierenden des Winkels zwischen Feder und Koppelstange liegt. Auf diese Weise wird allein schon durch die Rückwärtsbewegung des Schermessers eine leichte Öffnung des Gegenhalterhebels bewirkt, so daß der von ihm gehaltene Abschnitt problemlos von einem weiteren System übernommen werden kann.

Gemäß einem weiteren Merkmal der Erfindung ist vorgesehen, daß der Steuerhebel auf einer angetriebenen Kurvenscheibe abläuft, wobei der Steuerhebel zweckmäßigerweise als Doppelarmhebel ausgebildet ist. Dabei sollte er mit einer in Richtung auf die Kurvenscheibe wirkenden Feder verbunden sein.

Die Kurvenscheibe ist vorteilhafterweise auf einer Welle angeordnet, die auch Kurvenscheiben zur Betätigung des Schermessers trägt. Dies vereinfacht den Schertrieb.

Die Feder zur Vorspannung des Gegenhalterhebels in Halterichtung kann beispielsweise als Tellerfederpaket ausgebildet sein. Mit Tellerfedern lassen sich nämlich hohe Vorspannungen bei geringem Raumbedarf erzielen. Alternativ dazu kann die Feder aber auch als hydraulischer oder pneumatischer Druckzylinder ausgebildet sein und dann mit dem Drucksystem der Maschine in Verbindung stehen.

Schließlich ist es zweckmäßig, die Federkraft einstellbar zu machen.

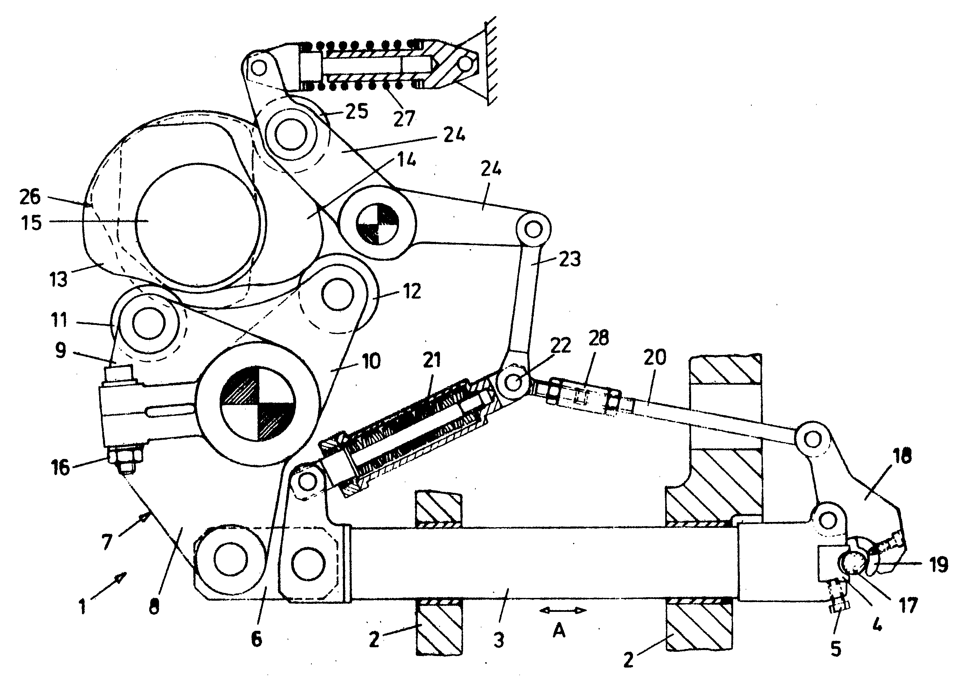

In der Zeichnung ist die Erfindung anhand eines Ausführungsbeispiels näher veranschaulicht. Sie zeigt die Mechanik einer Abschereinrichtung 1, wobei jedoch das stillstehende Gegenmesser mit seiner Andrückeinrichtung sowie die weiteren Teile der dazugehörenden Umformpresse der Übersichtlichkeit halber weggelassen sind.

Die Abschereinrichtung 1 weist einen im Maschinenrahmen 2 in den Richtungen des Doppelpfeiles A hin- und herbewegbaren Scherschlitten 3 auf, an dessen Vorderseite (in dieser Ansicht rechts) ein Schermesser 4 mittels einer Schraube 5 eingespannt ist. Über eine Verbindungslasche 6 ist der Scherschlitten 3 mit einem Dreiarmhebel 7 verbunden, dessen einer Arm 8 an der Verbindungslasche 6 angelenkt ist und dessen beiden anderen Arme 9, 10 über Rollen 11, 12 auf Kurvenscheiben 13, 14 abrollen. Die Kurvenscheiben 13, 14 sind auf einer Antriebswelle 15 angeordnet und komplementär geformt, so daß der Scherschlitten 3 bei der Hin- und Herbewegung zwangsgeführt ist. Zur Sicherung gegen Überlastung ist eine Reißschraube 16 vorgesehen.

An dem Scherschlitten 3 ist ein Gegenhaltersystem angeordnet, um den Drahtabschnitt 17 während des Schervorgangs fest einzuspannen und hierdurch eine rechtwinkelige Scherfläche zu erzeugen. Dieses Gegenhaltersystem weist einen am vorderen Ende des Scherschlittens 3 angeordneten Gegenhalterhebel 18 mit einem Gegenhalterstück 19 auf, der über eine Koppelstange 20 mit einer Tellerfeder 21 verbunden ist, die am hinteren Ende des Scherschlittens 3 angelenkt ist. Tellerfeder 21, Koppelstange 20 und Gegenhalterhebel 18 bilden ein als Viergelenkbogen ausgebildetes und mit dem Scherschlitten 3 bewegbares Kniehebelsystem, wobei der Winkel zwischen Tellerfeder 21 und Koppelstange 20 sehr flach ausgebildet ist.

Am Anlenkpunkt 22 von Tellerfeder 21 und Koppelstange 20 greift eine Steuerstange 23 ein, die mit einem ortsfest gelagerten Doppelarmhebel 24 verbunden ist. Dieser läuft über eine Rolle 25 auf einer Kurvenscheibe 26 (gestrichelt dargestellt), gegen die er mittels einer Schraubenfeder 27 gedrückt wird.

Die Kurvenscheibe 26 ist so geformt, daß die Steuerstange 23 für den Schervorgang nach oben bewegt wird. Auf diese Weise wird der Gegenhalterhebel 18 unter Einwirkung der Tellerfeder 21 gegen den Drahtabschnitt 17 gedrückt und spannt ihn dabei so fest ein, daß ein sauberes Abscheren gesichert ist. Die Belastung für den Schertrieb ist dabei gering, weil die Tellerfeder 21 aufgrund des flachen Winkels zur Koppelstange 20 fast vollständig auf den Gegenhalterhebel 18 und nur eine kleine Kraftkomponente auf die Steuerstange 23 wirken.

Bei der Rückhubbewegung des Scherschlittens 3 durchläuft der Anlenkpunkt 22 eine Stellung, bei der die Steuerstange 23 auf der Verlängerung der Winkelhalbierenden des Winkels zwischen Tellerfeder 21 und Koppelstange 20 liegt, der Anlenkpunkt 22 also am niedrigsten liegt und demgemäß der Gegenhalterhebel 18 schon leicht entspannt ist. Der Drahtabschnitt 17 wird dann nur noch leicht gehalten, kann dann problemlos vom nachfolgenden System übernommen werden, wenn der Gegenhalterhebel 18 über die Kurvenscheibe 26, die Rolle 25, den Doppelarmhebel 24 und die Steuerstange 23 entsprechend betätigt worden ist.

Für verschiedene Drahtstärken kann das Kniehebelsystem über eine Verstelleinrichtung 28 an der Koppelstange 20 eingestellt werden.

## Ansprüche

1. Vorrichtung (1) zum Abscheren von Abschnitten (17) von Draht oder Stangen, insbesondere in Umformpressen, mit einem von einem geradlinig hin- und hergehenden Messerschlitten (3) getragenen Schermesser (4) und einem diesem zugeordneten, an dem Messerschlitten (3) angelenkten Gegenhalter (19) in der Form eines Gegenhalterhebels (18) zum Einspannen des Abschnittes (17) bei dem Schervorgang sowie einem Gegenmesser, wobei der Gegenhalterhebel (18) an dem Messerschlitten (3) über ein Kniehebelsystem und in Halterichtung federnd vorgespannt ist und ein Hebelsystem zum mechanischen Steuern der Bewegung des Gegenhalterhebels (18) vorgesehen ist, dadurch gekennzeichnet, daß das Kniehebelsystem aus einer Feder (21) und einer an dieser in einem stumpfen Winkel und an dem Gegenhalterhebel (18) angelenkten Koppelstange (20) besteht, wobei der Winkel zwischen Feder (21) und Koppelstange (20) über eine Steuereinrichtung veränderbar ist, die eine mit dem Anlenkpunkt (22) von Feder (21) und Koppelstange (20) verbundene Steuerstange (23) aufweist.

2. Vorrichtung nach Anspruch 1, dadurch gekennzeichnet, daß der Winkel zwischen Feder (21) und Koppelstange (20) in einem Bereich von 120° bis 170° liegt.

3. Vorrichtung nach Anspruch 1 oder 2, dadurch gekennzeichnet, daß die Länge der Koppelstange (20) einstellbar ist.

4. Vorrichtung nach einem der Ansprüche 1 bis 3, dadurch gekennzeichnet, daß die Steuereinrichtung einen hin- und herschwenkbaren Steuerhebel (24) aufweist, der mit der Steuerstange (23) verbunden ist.

5. Vorrichtung nach einem der Ansprüche 1 bis 4, dadurch gekennzeichnet, daß die Steuerstange (23) derart angeordnet ist, daß sie bei Rückwärtsbewegung des Messerschlittens (3) eine Stellung erreicht oder durchläuft, in der die Steuerstange (23) in der Verlängerung der Winkelhalbierenden des Winkels zwischen Feder (21) und Koppelstange (20) liegt.

6. Vorrichtung nach Anspruch 4 oder 5, dadurch gekennzeichnet, daß der Steuerhebel (24) auf einer angetriebenen Kurvenscheibe (26) abläuft.

7. Vorrichtung nach Anspruch 6, dadurch gekennzeichnet, daß der Steuerhebel (24) als Doppelarmhebel ausgebildet ist.

8. Vorrichtung nach Anspruch 6 oder 7, dadurch gekennzeichnet, daß der Steuerhebel (24) mit einer in Richtung auf die Kurvenscheibe (26) wirkenden Feder (27) verbunden ist.

9. Vorrichtung nach einem der Ansprüche 6 bis 8, dadurch gekennzeichnet, daß die Kurvenscheibe (26) auf einer Welle (15) angeordnet ist, die auch Kurvenscheiben (13, 14) zur Betätigung des Messerschlittens (3) trägt.

10. Vorrichtung nach einem der Ansprüche 1 bis 9, dadurch gekennzeichnet, daß die Feder (21) als Tellerfederpaket ausgebildet ist.

11. Vorrichtung nach einem der Ansprüche 1 bis 9, dadurch gekennzeichnet, daß die Feder (21) als hydraulischer oder pneumatischer Druckzylinder ausgebildet ist.

12. Vorrichtung nach einem der Ansprüche 1 bis 11, dadurch gekennzeichnet, daß die Kraft der Feder (21) einstellbar ist.

## Claims

1. Device (1) for shearing off sections (17) from wires or rods, in particular in metal-forming presses, with a shear blade (4) borne by a blade carriage (3) reciprocating in a straight line and, associated with the shear blade, an overarm (19), hinged to the blade carriage (3), in the form of an overarm lever (18) for clamping the section (17) during the shearing process, and a counter-blade, the overarm lever (18) being resiliently pretensioned on the blade carriage (3) in the holding direction by means of a toggle system, and a lever system being provided for mechanically controlling the movement of the overarm lever (18), characterised in that the toggle system consists of a spring (21) and a coupling rod (20) hinged to the latter under an obtuse angle and to the overarm lever (18), the angle between the spring (21) and the coupling rod (20) being variable via a control device having a control rod (23) which is connected to the fulcrum (22) of the spring (21) and coupling rod (20).

2. Device according to Claim 1, characterised in that the angle between the spring (21) and coupling rod (20) is within a range from 120° to 170°.

3. Device according to Claim 1 or 2, characterised in that the length of the coupling rod (20) is adjustable.

4. Device according to one of Claims 1 to 3, characterised in that the control device has a control lever (24) which can be swivelled to and fro and is connected to the control rod (23).

5. Device according to one of Claims 1 to 4, characterised in that the control rod (23) is arranged in such a way that, during the return motion of the blade carriage (3), it reaches, or passes through, a position in which the control rod (23) is located in the prolongation of the bisectrix of the angle between the spring (21) and coupling rod (20).

6. Device according to Claim 4 or 5, characterised in that the control lever (24) rolls on a driven cam disc (26).

7. Device according to Claim 6, characterised in that the control lever (24) is constructed as a double-arm lever.

8. Device according to Claim 6 or 7, characterised in that the control lever (24) is connected to a spring (27) acting in the direction of the cam disc (26).

9. Device according to one of Claims 6 to 8, characterised in that the cam disc (26) is mounted on a shaft (15) which also carries cam discs (13, 14) for actuating the blade carriage (3).

10. Device according to one of Claims 1 to 9, characterised in that the spring (21) is constructed as a pack of discs springs.

11. Device according to one of Claims 1 to 9, characterised in that the spring (21) is constructed as a hydraulic or pneumatic pressure cylinder.

12. Device according to one of Claims 1 to 11, characterised in that the force of the spring (21) is adjustable.

## Revendications

1. Dispositif (1) pour cisailler des tronçons (17) de fil métallique ou de barre, en particulier dans des presses de formage, comportant une lame de cisaille (4) portée par un chariot (3) animé d'un mouvement rectiligne de va-et-vient et comportant un contre-bridage (19) correspondant à la lame et articulé sur le chariot (3), sous forme d'un levier (18) de contre-bridage pour brider le tronçon (17) lors du processus de cisaillage, ainsi qu'une contre-lame, étant précisé que le levier de contre-bridage (18) est précontraint élastiquement sur le chariot (3) par l'intermédiaire d'un système de levier à genouillère dans la direction du bridage et qu'il est prévu un système de levier pour la commande mécanique du mouvement du levier de contre-bridage (18), caractérisé en ce que le système de levier à genouillère est constitué d'un ressort (21) et d'une biellette (20) articulée à ce ressort en faisant avec lui un angle obtus et articulée au levier de contre-bridage (18), étant précisé que l'angle formé entre le ressort (21) et la biellette (20) peut être modifié par un dispositif de commande qui présente une tige de commande (23) reliée au point d'articulation (22) du ressort (21) et de la biellette (20).

2. Dispositif selon la revendication 1, caractérisé en ce que l'angle formé entre le ressort (21) et la biellette (20) se situe sur une plage de 120° à 170°.

3. Dispositif selon la revendication 1 ou la revendication 2, caractérisé en ce que l'on peut régler la longueur de la biellette (20).

4. Dispositif selon l'une des revendications 1 à 3, caractérisé en ce que le dispositif de commande présente un levier de commande (24) qui peut pivoter selon un mouvement de va-et-vient et qui est relié à la tige de commande (23).

5. Dispositif selon l'une des revendications 1 à 4, caractérisé en ce que la tige de commande (23) est disposée de façon à prendre ou à parcourir, lors du mouvement de rappel du chariot (23) une position pour laquelle la tige de commande (23) se trouve dans le prolongement de la bissectrice de l'angle formé entre le ressort (21) et la biellette (20).

6. Dispositif selon la revendication 4 ou la revendication 5, caractérisé en ce que le levier de commande (24) court sur une came (26) entraînée.

7. Dispositif selon la revendication 6, caractérisé en ce que le levier de commande (24) est conçu sous forme de levier à double bras.

8. Dispositif selon la revendication 6 ou la revendication 7, caractérisé en ce que le levier de commande (24) est relié à un ressort (27) qui agit dans la direction de la came (26).

9. Dispositif selon l'une des revendications 6 à 8, caractérisé en ce que la came (26) est disposée sur un arbre (15) qui porte également les cames (13, 14) de manœuvre du chariot (3).

10. Dispositif selon l'une des revendications 1 à 9, caractérisé en ce que le ressort (21) est conçu comme empilement de rondelles Belleville.

11. Dispositif selon l'une des revendications 1 à 9, caractérisé en ce que le ressort (21) est conçu comme vérin hydraulique ou pneumatique.

12. Dispositif selon l'une des revendications 1 à 11, caractérisé en ce que la force du ressort (21) est réglable.